Europäisches Patentamt

European Patent Office

Office européen des brevets

(11) Veröffentlichungsnummer: **0 220 748**
**A2**

(12) **EUROPÄISCHE PATENTANMELDUNG**

(21) Anmeldenummer: **86115213.0**

(22) Anmeldetag: **03.11.86**

(51) Int. Cl.⁴: **A 23 L 1/31**

(30) Priorität: **01.11.85 EP 85113928**

(71) Anmelder: **Rother, Karl-Heinz, Heesenstrasse 8, D-4047 Dormagen (DE)**

(43) Veröffentlichungstag der Anmeldung: **06.05.87 Patentblatt 87/19**

(72) Erfinder: **Rother, Karl-Heinz, Heesenstrasse 8, D-4047 Dormagen (DE)**

(74) Vertreter: **Gille, Christian, Dipl.-Ing. et al, Türk, Gille + Hrabal Patentanwälte Bruckner Strasse 20, D-4000 Düsseldorf 13 (DE)**

(84) Benannte Vertragsstaaten: **AT BE CH DE ES FR GB GR IT LI LU NL SE**

(54) **Fleischrolle.**

㊼ Bei einer auf einem Ofen, einem Grill oder dergleichen zu bratenden Fleischrolle und insbesondere einer gefüllten Fleischrolle ist wenigstens der Rand, der die Innenseite der gefüllten Fleischrolle bildenden Fleischscheibe mit einem geniessbaren Haftmittel versehen, so dass die Fleischrolle ohne ein Werkzeug wie eine Zange gehandhabt werden kann und mit einem oder mehreren Stielen versehen werden kann, so dass ein Handgriff sowohl für das Braten als auch für den Verkauf verzehrt gebildet wird. Eine derartige Fleischrolle ist besonders für Bratküchen mit Strassenverkauf oder den Verkauf für Verzehr im Stehen geeignet.

EP 0 220 748 A2

ACTORUM AG

0220748

Karl-Heinz Rother — Heesenstraße 8, 4047 Dormagen

Beschreibung

.Fleischrolle

Die Erfindung betrifft eine Fleischrolle und insbesondere eine gefüllte Fleischrolle, die auf einem Grill zu braten ist.

Auf einem Grill zu bratende Fleischspeisen werden mit einer Zange oder dergleichen auf den Grill gelegt und auch von Zeit zu Zeit gewendet. Zum Verzehr werden derartige Fleischspeisen wie beispielsweise Würstchen in ein aufgeschnittenes Brötchen oder zwischen Brotstücke gelegt, um sie anfassen zu können, sofern man nicht im häuslichen Bereich einen Teller und Besteck zur Verfügung hat. Der Verzehr von zwischen Brotstücken gehaltenen Würstchen oder dergleichen ist umständlich, weil man sich dabei leicht die Finger beschmutzen kann und außerdem die Gefahr besteht, daß das Würstchen aus dem Brötchen herausfällt, wenn man es nicht sorgfältig festhält.

Es ist auch bekannt, Lebensmittel wie Fleischstückchen auf einen Spieß zu stecken und dann zu grillen oder zu braten. Der Spieß hält dabei die Fleischstückchen zusammen, ist jedoch nicht als Handhabe geeignet. Vielmehr benötigt man auch in diesem Falle zum Auflegen auf den Grill oder die Bratfläche und auch zum Wenden eine Zange.Für den Verzehr muß man die Fleischstückchen vom Spieß abstreifen oder den Spieß wiederum zwischen Brotstücken eingeklemmt halten.

Der Erfindung liegt die Aufgabe zugrunde, die Möglichkeit zu schaffen, eine Fleischrolle oder dergleichen ohne ein Arbeitsgerät beim Braten handhaben und beim Verzehr ohne Brot oder dergleichen halten zu können.

Diese Aufgabe wird erfindungsgemäß dadurch gelöst, daß die Fleischrolle oder dergleichen mit einem als Handgriff ausgebildeten Stiel versehen ist. Dieser Stiel ist vorzugsweise mit seinem einen Ende in die Fleischrolle eingebettet und besteht besonders zweckmäßig aus Holz.

Mit dem als Handgriff ausgebildeten Stiel wird die Handhabung der zu bratenden oder zu grillenden Fleischrolle bedeutend erleichtert. Man kann die Fleischrollen von Hand auf den Ofen bzw. den Grill legen, ohne die Fleischrolle selbst von Hand oder mit einem mit der Zeit verschmutzenden Arbeitsgerät wie einer Zange berühren zu müssen. Auch beim Wenden und beim Verkauf wird die Fleischrolle selbst nicht berührt, weil der Stiel für alle Handhabungen geeignet und ausreichend ist. Schließlich muß die Fleischrolle auch beim Verzehr nicht berührt werden, weil sie an dem Stiel bis zum endgültigen Verzehr gehalten wird. Der Stiel ist dabei so tief in die Fleischrolle eingebettet, daß eine ausreichend feste Verbindung zwischen Stiel und Fleischrolle besteht und der Stiel andererseits beim Verzehr
aber nicht merklich stört, wie dies beispielsweise
bei einem Schaschlik-Spieß der Fall ist. Die Fleischrolle
kann bis auf den letzten Restverzehrt werden, ohne
sie berühren zu müssen. Der vorzugsweise aus Holz bestehende Stiel stört auch nicht den Verzehr, weil Holz ein
sozusagen neutraler Werkstoff ist und kein unangenehmes
Gefühl hervorruft, wenn der Stiel beim Verzehr der
Fleischrolle in den Mund gelangt.

Bei einer bevorzugten praktischen Ausführungsform der
Erfindung ist der Stiel etwa in der mittleren Achse
der länglichen Fleischrolle angeordnet . Dabei kann
die Fleischrolle um das eine Ende des Stiels herumgewickelt sein, d.h. die äußere Hülle der Fleischrolle
ist um den Stiel gewickelt, um eine ausreichend
stabile Verbindung zwischen Fleischrolle und Stiel
zu erzielen , selbst wenn die Fleischrolle zwischen
einer äußeren Fleischschicht eine Füllung enthält.

Ist der Stiel etwa in der Mittelachse der Fleischrolle
angeordnet, liegt er so, daß er selbst dann gut erfaßt
werden kann, wenn die Fleischrolle auf einem Grill
oder einer Ofenplatte zum Braten liegt. Vorzugsweise
wird die Fleischrolle aber so auf der Ofenplatte bzw.
dem Grill angeordnet, daß der als Handgriff dienende
Stiel über die Kante übersteht, weil die Handhabung
dann besonderes einfach und bequem ist. Beim Verzehr
kann man sozusagen um den Stiel herum essen , so daß
die Fleischrolle bis zum Verzehr des letzten Restes am Stiel haften bleibt.

Durch die Erfindung wird eine Fleischrolle oder eine ähnliche zu braten oder zu grillende Speise geschaffen, die sich sowohl beim Braten und Grillen als auch beim Verkauf und Verzehr ohne irgendwelche Hilfsmittel einfach und bequem handhaben läßt, ohne daß die Gefahr einer Verschmutzung der Hände des Braters und des Verzehrers besteht. Die erfindungsgemäße Fleischrolle eignet sich deshalb besonders für den Verzehr an Lebensmittelständen, die an Straßen oder auf Volksfestplätzen aufgestellt werden. Sie ist aber ebenso für Bratküchen mit Selbstbedienung oder Straßenverkauf geeignet

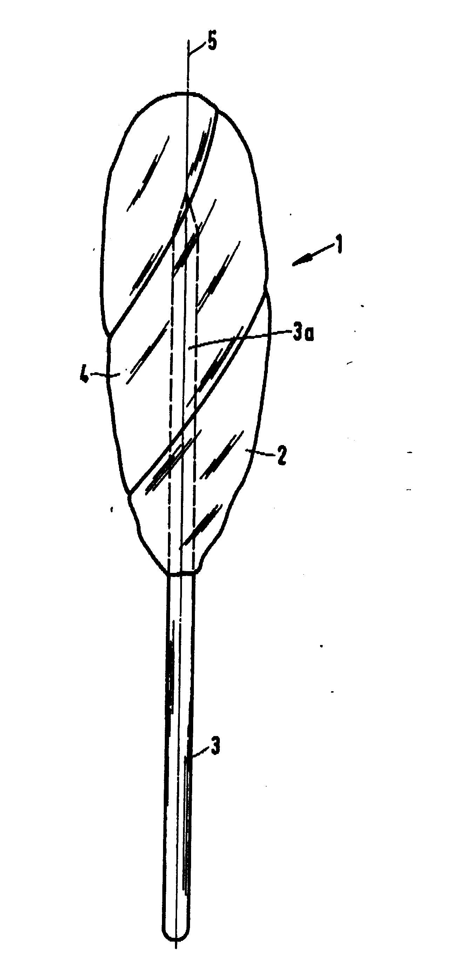

In der Zeichnung ist ein Ausführungsbeispiel einer erfindungsgemäßen Fleischrolle in Seitenansicht dargestellt.

Die Fleischrolle 1 besteht aus einer zum Verzehr bestimmten Rolle 2 und einem an dieser angebrachten Stiel 3, der beispielsweise aus Holz oder neutralem Kunststoff gefertigt ist.

Die Rolle 2 ist aus Fleischstreifen 4 gewickelt und kann eine nicht gezeigte Füllung enthalten. Der Stiel 3 ragt mit seinem einen Ende 3a ausreichend tief in die Fleischrolle 2 hinein, um diese sicher sowohl während der Handhabung als auch des Verzehrs mit dem Stiel 3 verbunden zu halten.

Der größere Teil des Stieles 3 ragt aus der Fleischrolle 2 heraus und bildet somit eine Handhabe sowohl für das Braten als auch den Verkauf und Verzehr. Es ist erkennbar, daß der Stiel 3 etwa in der Längsachse 5 der eine gewisse Dicke aufweisenden Fleischrolle angeordnet ist, so daß er auch dann untergriffen werden kann, wenn die Fleischrolle auf einer Bratfläche oder einem Grill liegt. Der Stiel 3 besteht aus Holz oder einem für Lebensmittel unbedenklichen Kunststoff und kann nach dem Verzehr fortgeworfen werden.

Der Stiel 3 ragt etwa um Handbreite aus der Rolle heraus, damit er beim Verzehr der Rolle gut gehalten werden kann. Das in der Rolle 2 befindliche Ende 3a erstreckt sich über etwa zwei Drittel bis drei Viertel der Länge der Rolle 2, die somit sicher am Stiel 3 hält.

Die Aufgabe wird außerdem durch ein Verfahren gemäß des Patentanspruches 6/gelöst. Weitere vorteilhafte Ausgestaltung der Erfindung sind Gegenstand der Unteransprüche 8 bis 10.

Dadurch, daß zur Herstellung der Fleischrolle eine etwa rechteckige dünne Fleischscheibe verwandt wird, in dessen Eckbereich in einem Abstand und in einem Winkel zur Symmetrieachse der noch nicht gerollten Fleischscheibe ein Stiel angeordnet wird und dieser Stiel mindestens zweifach die Fleischscheibe durchsticht, die Fleischfüllung vor dem Aufwickeln auf die Fleischscheibe aufgetragen wird und die Fleischscheibe beginnend mit dem unteren Eckbereich um den Stiel gewickelt wird, kann die Fleischrolle auf besonders einfache und um so praktikablere Weise hergestellt werden, wobei gewährleistet wird, daß durch dieses Verfahren die Fleischrolle dauerhaft bis

6

0220748

zum Verzehr am Stiel haften bleibt, selbst wenn die Fleischrolle eine Füllung aufweist ohne daß hierzu künstliche Hilfsmittel benutzt werden müßten.

Wird die Fleischscheibe in gefrorenem Zustand zugeschnitten ermöglicht dies den Zuschnitt besonders dünner etwa rechteckiger und damit gut wickelbarer Scheiben, wobei diese Fleischscheiben eine nicht exakt rechteckige Form aufweisen müssen, sondern nur zu einer Rolle wickelbar zu sein haben. D.h. daß auch ovale oder andere Formen entsprechend dem Rohzustand des Fleisches genutzt werden können.

Durch das Einschlagen, der über die Mittelachse des Stieles und der Masse der Fleischrolle hinausragenden Fleischlappen in Richtung Stielende, nach jeder Umwicklung des Stieles, wird die Fleischrolle am oberen Ende geschlossen, wodurch sich ihre Festigkeit und ihre bequeme Handhabung sowohl bei der Zubereitung , Lagerung, Braten und beim Verzehr erhöht.

Wird wenigstens der Rand, der die Innenseite der Fleischrolle bildenden Fleischscheibe , mit einem Haftmittel bestrichen, so wird dadurch, eine besonders hohe Haftfähigkeit der einzelnen Wicklungen der Fleischscheibe untereinander, sowie an dem Stiel erreicht.

Durch zusätzliches Bestreuen der mit Haftmittel bestrichenen Teile der Fleischscheibe mit Paniermehl, wird die Haftfähigkeit noch um ein weiteres erhöht, ohne Geschmackseinbußen hinnehmen zu müssen.

Die Verwendung von geschlagenen Ei als Haftmittel, stellt eine relativ preiwerte und wirkungsvolle Methode dar, um für eine gute Stabilität der Fleischrolle selbst und ihrer Haftung am Stiel zu sorgen. Des weiteren wird durch die Verwendung von geschlagenen Ei als Haftmittel gewährleistet, daß nicht irgendwelche Kunstprodukte verwandt werden müssen.

Dadurch , daß wenigstens der Rand, der die Innenseite der gewickelten Fleischrolle bildenden Fleischscheibe mit einem genießbaren Haftmittel versehen ist, wird eine besonders hohe Haftfähigkeit der einzelnen Wicklungen der Fleischscheibe untereinander erreicht, so daß die Fleischrolle ohne weitere Arbeitsgeräte sowohl beim Braten als auch beim Verzehr die gewünschte Festigkeit bzw. den gewünschten Halt aufweist und somit auch ohne Stiel zubereitet werden kann. Das gleiche gilt für den Fall , daß der Stiel nicht nur aus einem Ende sondern aus beiden Enden der Fleischrolle hinausragt.

Ist die Fleischrolle mit einem als Handgriff ausgebildeten Stiel versehen, ist dieser Stiel in die Fleischrolle eingebettet und ragt dieser mit wenigstens einem Ende aus der Fleischrolle heraus, so ist dadurch eine besonders gute Handhabung sowohl bei der Zubereitung als auch beim Verzehr gewährleistet und dies unabhängig davon , ob der Stiel lediglich an einer Seite der Fleischrolle oder ab er an beiden Seiten der Fleischrolle herausragt.

Durch die Verwendung einer etwa rechteckigen dünnen Fleischscheibe und dadurch , daß eine etwaige Füllung vor dem Rollen der Fleischscheibe auf dieselbe aufgetragen wird und daß die Fleischscheibe, beginnend mit einem unteren Erkbereich aufgewickelt wird, kann die Fleischrolle auch ohne Verwendung eines Stiels auf besonders einfache aber um so praktikablere Weise hergestellt werden, wobei gewährleistet wird, daß durch dieses Verfahren die Fleischrolle dauerhaft bis zum Verzehr in ihrer Form stabil bleibt, und selbst dann , wenn die Fleischrolle eine Füllung aufweist ohne daß hier zu künstliche Hilfsmittel benutzt werden müßten.

Wird nach jeder Wickel-Umdrehung der Fleischrolle um ihre Längsachse der über der Masse der Fleischrolle hinausragende Fleischlappen zur Symmetrieachse hin eingeschlagen , so wird dadurch ihre Festigkeit und ihre bequeme Handhabung sowohl bei der Zubereitung , Lagerung, Braten und beim Verzehr erhöht.

Bei der Verwendung eines aus beiden Seiten der Fleischrolle hinausragenden Stieles wird nach jeder Umwicklung des Stieles der über der Masse der Fleischrolle hinausragende Fleischlappen zur Mitte hin eingeschlagen oder aber bei Verwendung zweier Stiele , wobei jeweils ein Ende eines jeden Stieles auf jeweils einer Seite der Fleischrolle hinausragt, wird nach jeder Umwicklung der beiden Stiele der über der Masse der Fleischrolle hinausragende Fleischlappen zum jeweiligen Stielende hin eingeschlagen.

G/EK/su

G55594

Karl-Heinz Rother , Heesenstraße 8, 4047 Dormagen

---

Patentansprüche:

1. Fleischrolle oder dergleichen, insbesondere gefüllte Fleischrolle, die auf einem Ofen, einem Grill oder dergleichen zu braten ist, d a d u r c h   g e k e n n z e i c h n e t , daß wenigstens der Rand, der die Innenseite der gewickelten Fleischrolle (2) bildenden Fleischscheibe mit einem genießbaren Haftmittel versehen ist.

2. Fleischrolle nach Anspruch 1, dadurch gekennzeichnet, daß der mit einem Haftmittel bestrichene Teil der Fleischscheibe mit Paniermehl bestreut ist.

3. Fleischrolle nach Anspruch 1 oder 2, dadurch gekennzeichnet, daß das Haftmittel geschlagenes Ei ist.

4. Fleischrolle nach einem der Ansprüche 1 bis 3, dadurch gekennzeichnet, daß sie mit einem als Handgriff ausgebildeten Stiel (3) versehen ist, daß der Stiel (3) in die Fleischrolle (2) eingebettet ist und mit wenigstens einem Ende aus der Fleischrolle (2) hinausragt.

5. Fleischrolle nach Anspruch 4, dadurch gekennzeichnet, daß der Stiel (3) etwa in der Mittelachse (5) der länglichen Fleischrolle (2) angeordnet ist.

6. Verfahren zur Herstellung einer Fleischrolle nach einem der Ansprüche 1 bis 5, dadurch gekennzeichnet, daß eine etwa rechteckige dünne Fleischscheibe geschnitten wird, daß eine etwaige Füllung vor dem Rollen der Fleischscheibe auf dieselben aufgetragen wird und daß die Fleischscheibe, beginnend mit einem Eckbereich um ihre Längsachse aufgewickelt wird.

7. Verfahren zur Herstellung einer Fleischrolle nach einem der Ansprüche 1 bis 5, dadurch gekennzeichnet, daß eine etwa rechteckige dünne Fleischscheibe geschnitten wird, daß in deren Eckbereich in einem Abstand und in einem Winkel zu Symmetrieachse der noch nicht gerollten Fleischscheibe ein Stiel (3) angeordnet wird, daß der Stiel (3) mehrfach, mindestens jedoch zweifach, durch die Fleischscheibe gestochen wird, daß eine etwaige Füllung vor dem Rollen der Fleischscheibe auf dieselbe aufgetragen wird und daß die Fleischscheiben beginnend mit dem unteren Eckbereich, der den Stiel (3) aufweisenden Hälfte, um den Stiel (3) gewickelt wird.

8. Verfahren nach Anspruch 6 oder 7, dadurch gekennzeichnet, daß die etwa rechteckige dünne Fleischscheibe in gefrorenem Zustand geschnitten wird.

9. Verfahren nach Anspruch 6 oder 8, dadurch gekennzeichnet, daß nach jeder Wickel-Umdrehung der Fleischrolle (2) um ihre Längsachse der über der Masse der Fleischrolle (2) hinausragende Fleischlappen zur Symmetrieachse hin eingeschlagen wird.

10. Verfahren nach Anspruch 7 oder 8, dadurch gekennzeichnet, daß nach jeder Umwicklung des Stiels (3) der über der verlängerten Mittelachse des Stieles und/oder über der Masse der Fleischrolle (2) hinausragende Fleischlappen zum Stielende oder zur Symmetrieachse des Stieles hin eingeschlagen wird.

G/EK/su